# EUROPÄISCHE PATENTSCHRIFT

(11) **EP 1 472 119 B1**
(45) Veröffentlichungstag und Bekanntmachung des Hinweises auf die Patenterteilung: **12.09.2007**
(21) Anmeldenummer: 02774380.6
(22) Anmeldetag: 17.09.2002
(51) Int. Cl.: B60S 1/56, B60S 1/54

(54) **VORRICHTUNG F R EIN FRONTABDECKTEIL EINES KRAFTFAHRZEUGS**
DEVICE TO BE MOUNTED ON THE FRONT PART OF A MOTOR VEHICLE
DISPOSITIF DESTINE A ETRE MONTE SUR LA PARTIE AVANT D'UN VEHICULE A MOTEUR

(30) Priorität: 06.10.2001 DE 10149337
(43) Veröffentlichungstag der Anmeldung: 03.11.2004
(73) Patentinhaber: ROBERT BOSCH GMBH, 70442 Stuttgart (DE)
(72) Erfinder: WINTER, Klaus, 71701 Schwieberdingen (DE); KOERBER, Sabine, 71638 Ludwigsburg (DE); LUCAS, Bernhard, 74354 Besigheim (DE); REICHERT, Andreas, 71720 Oberstenfeld (DE)
(86) Internationale Anmeldenummer: PCT/DE2002/003485
(87) Internationale Veröffentlichungsnummer: WO 2003/033318

(56) Entgegenhaltungen:
- WO-A-01/68425
- WO-A-02/21636
- DE-A- 19 850 639
- JP-A- 2000 046 948

## Beschreibung

Die vorliegende Erfindung betrifft ein Frontbauteil eines Kraftfahrzeugs, hinter dem ein Radarsender/empfänger so befestigt ist, dass dieser von vorne nicht sichtbar ist. In winterlichen Umgebungen kann es zu Eis- und Schneeablagerungen an dem Frontbauteil kommen, wodurch die Funktionsfähigkeit des Radarsensors beeinträchtigt werden kann. Gemäß der vorliegenden Erfindung ist es möglich, diese Niederschlagsablagerungen auf dem Frontbauteil zu beseitigen und/oder zu verhindern.

### Stand der Technik

Aus der DE 197 24 320 A1 ist ein Verfahren zur Herstellung einer heizbaren Antennenlinse bekannt. Es wird hier eine heizbare Antennenlinse aus einem dielektrischen Körper beschrieben, der darin eine Anordnung aus elektrischen Leiterbahnen besitzt, wobei die elektrisch leitfähige Anordnung nicht in einer Ebene liegt.

Aus dem Buch "Autoelektrik, Autoelektronik", Vieweg-Verlag, 3. Auflage 1998, werden auf Seite 263f. Aufbau und Arbeitsweise von Scheinwerferreinigungsanlagen beschrieben. So besitzen Scheinwerferreinigungsanlagen die Aufgabe, den Schmutz auf den Streuscheiben der Hauptscheinwerfer zu beseitigen. Die beschriebene Ausführungsvariante der Hochdruckwaschanlagen zeichnet sich aus, indem diese sowohl für Glas- als auch für Kunststoffstreuscheiben einsetzbar sind. Die Reinigungswirkung wird hauptsächlich durch den Reinigungsimpuls der Wassertropfen bestimmt. Als maßgebende Größen der Reinigungsimpulse sind der Abstand zwischen Düse und Streuscheibe, die Größe, Auftreffwinkel und Auftreffgeschwindigkeit der Wassertropfen sowie die Wassermenge genannt.

Aus der DE 198 50 639 A1 ist ein Fahrzeugradarsystem zum Messen des Abstandes zwischen Fahrzeugen und zum Auslösen eines Alarms bei einem gefährlichen Abstand zwischen den Fahrzeugen bekannt, wobei dieses Fahrzeugradarsystem einen Mechanismus zum Wischen der Oberfläche eines Schneeabschirmfilms oder einer Schneeabschirmplatte mittels Bürsten enthält oder mittels eines Wischers oder eines Mechanismus zum Ausspritzen von Waschflüssigkeit auf die Oberfläche einer Schneeabschirmplatte oder einen Mechanismus zum Steuern der Temperatur im Gehäuse einer Schneeabschirmplatte durch Einblasen von Luft in das Gehäuse und/oder durch die Zirkulation von Wasser im Gehäuse sowie eine Klimabedingungserfassungseinheit zum Erfassen der klimatischen Bedingungen in der Umgebung eines das Fahrzeugradarsystem enthaltenden Fahrzeugs aufweist.

Aus der WO 02/21 636 A1 ist eine Einrichtung bekannt, die einem Emblem und/oder einer charakteristischen Struktur eines Kraftfahrzeugs zugeordnet ist. Das Emblem und/oder die charakteristische Struktur kann somit beispielsweise von Schnee, Eis, Schmutz und Wasser freigehalten werden. Hierbei ist insbesondere vorgesehen, dass dem Emblem und/oder der charakteristischen Struktur ein Sender zum senden elektromagnetischer Wellen, insbesondere Radarwellen, zugeordnet ist.

### Kern und Vorteile der Erfindung

Kern der vorliegenden Erfindung ist ein Frontabdeckteil eines Kraftfahrzeugs, das die kennzeichnenden Merkmale des Hauptanspruchs aufweist. Diese Vorrichtung ist vorteilhafterweise in der Lage, Niederschlagsablagerung in flüssiger oder fester Form auf Frontabdeckteilen eines Kraftfahrzeugs zu beseitigen und/oder zu verhindern. Durch die in den Unteransprüchen aufgeführten Maßnahmen ergeben sich vorteilhafte Weiterbildungen und Verbesserungen der im Hauptanspruch angegebenen Merkmale.

Besonders vorteilhaft ist, dass als Frontabdeckteil ein Stoßfänger, ein Spoiler, eine Kühlerabdeckung, die Motorhaube oder eine Beleuchtungseinrichtung verwendet wird.

Besonders vorteilhaft ist es, die Oberfläche des Frontbauteils in dem Bereich, der von elektromagnetischen Wellen des Radarsensors durchdrungen wird, so zu wählen, dass Niederschlagsablagerungen von vornherein verhindert werden.

Dies geschieht vorteilhafterweise durch die Verwendung eines Materials, das mit Wasser, im Benetzungsgleichgewicht, einen ausreichend großen Kontakt- oder Randwinkel aufweist, so dass Wasser abperlt. Dieses Material kann entweder nur auf der Oberfläche des Frontbauteils in einer dünnen Schicht aufgebracht werden oder aber das Frontbauteil kann teilweise oder massiv aus diesem Material gefertigt sein.
Besonders vorteilhaft ist es, wenn hierzu ein Stoff wie Polytetrafluorethylen oder ein perfluoriertes Silan verwendet wird.

### Zeichnungen

Nachfolgend werden Ausführungsbeispiele der Erfindung anhand von Zeichnungen erläutert. Die Figur zeigt ein Ausführungsbeispiel einer erfindungsgemäßen Vorrichtung.

### Beschreibung eines Ausführungsbeispiels

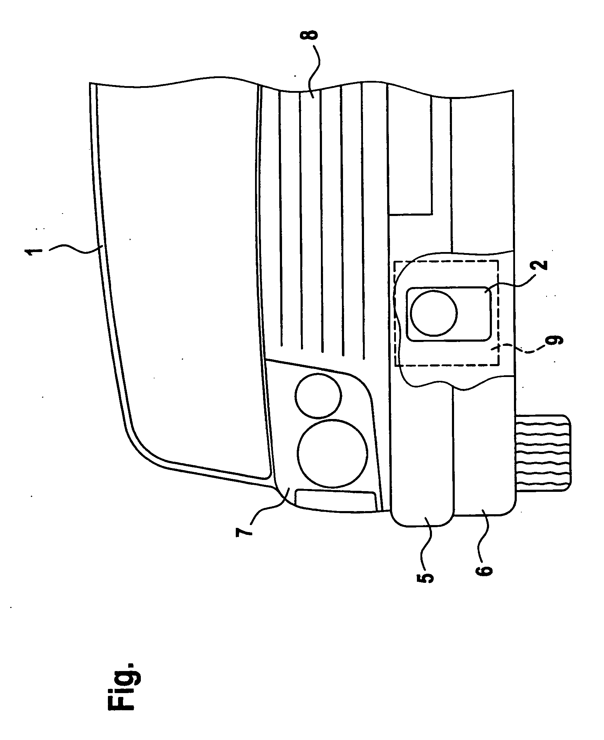

Die Figur zeigt eine Ausführungsvariante der erfindungsgemäßen Vorrichtung. Zu sehen ist ein Kraftfahrzeug 1 in Vorderansicht. Dieses weist an der Frontseite sogenannte Frontbauteile auf, insbesondere in Form ein Stoßfängers 5, eines Frontspoilers 6, in Form zweier symmetrisch angeordneter Beleuchtungseinrichtungen 7 sowie einen Kühlergrill 8. Zusätzlich ist an der Vorderseite des Fahrzeugs 1 ein Radarsensor 2 vorgesehen, der Radarstrahlung sendet und empfängt, und der insbesondere zur adaptiven Fahrgeschwindigkeitsregelung verwendet werden kann. Aus ästhetischen Gründen ist der Radarsensor hinter einem oder mehreren der genannten Frontbauteile 5,6,7,8 montiert. Dabei ist zu erwähnen, dass die Frontbauteile 5,6,7,8 aus einem Material gefertigt sein müssen, das für elektromagnetische Wellen durchlässig ist und diese nicht absorbiert. Erfindungsgemäß kann die Radareinrichtung 2, die in diesem Beispiel hinter dem Frontstoßfänger 5 und dem Frontspoiler 6 angeordnet ist, auch hinter einem anderen Frontbauteil wie beispielsweise der Kühlerabdeckung 8, einer der beiden Beleuchtungseinrichtungen 7 oder der Motorhaube angeordnet sein. In dem hier dargestellten Ausführungsbeispiel ist auf dem Frontbauteil bzw. den Frontbauteilen 5,6 , hinter denen sich der Radarsensor 2 verbirgt, mit einer speziellen Oberfläche überzogen. Diese spezielle Oberfläche ist mindestens in dem Bereich des Frontbauteils aufgebracht, der von der elektromagnetischen Strahlung des Radarsensors 2 durchdrungen wird. Diese spezielle Oberfläche, die auf das Frontbauteil 5,6,7,8 aufgebracht wird, ist im Ausführungsbeispiel, das in Figur 3 dargestellt ist, durch eine strichlierte Linie 9 berandet. Selbstverständlich kann diese spezielle Oberfläche auch in einem größeren Bereich oder über das gesamte Frontbauteil aufgebracht sein. Vorteilhafterweise bedient man sich bei dieser speziellen Oberfläche eines Oberflächenmaterials, das die Eigenschaft besitzt, Wasser oder wasserähnliche Stoffe abzuweisen, indem dieses Oberflächenmaterial mit Wasser einen ausreichend großen Kontakt- oder Randwinkel bildet. Als großer Kontaktwinkel wird in diesem Fall ein Winkel von mindestens 90 Grad verstanden. Der Kontaktwinkel oder Randwinkel ist der Winkel, der sich am Rande eines auf einer Festkörperoberfläche befindlichen Tropfens zwischen der Tropfenoberfläche und der Festkörperoberfläche im Benetzungsgleichgewicht bildet. Weiterhin sollte dieses Material es ermöglichen, auf einfache und kostengünstige Weise auf Kunststoffe aufgetragen zu werden, insbesondere auf Kunststoffe die im Automobilbau für Karosserieelemente eingesetzt werden. Als Oberflächenmaterialien eignen sich insbesondere Stoffe wie perfluorierte Silane oder Polytetrafluorethylen (Teflon).

## Patentansprüche

1. Frontabdeckteil (5,6,7,8) eines Kraftfahrzeugs (1), wobei wenigstens ein Teil des Frontabdeckteils von elektromagnetischen Wellen eines Radarsensors (2) zur adaptiven Fahrgeschwindigkeitsregelung durchdrungen wird wobei Niederschlagsablagerungen in fester oder flüssiger Form in einem Bereich der Oberfläche des Frontabdeckteils (5,6,7,8) durch die Beschaffenheit der Oberfläche beseitigt und/oder verhindert werden, **dadurch gekennzeichnet, dass** ein Material (9), das auf der Oberfläche des Frontabdeckteils verwendet ist und (5,6,7,8) Niederschlagsablagerungen verhindert, mit Wasser einen Kontaktwinkel größer 90 Grad ausbildet.

2. Frontabdeckteil nach Anspruch 1, **dadurch gekennzeichnet, dass** das Frontabdeckteil ein Stoßfänger (5), ein Spoiler (6), eine Kühlerabdeckung (8), die Motorhaube oder eine Beleuchtungseinrichtung (7) ist.

3. Frontabdeckteil nach Anspruch 1 oder 2, **dadurch gekennzeichnet, dass** das Material (9), das auf der Oberfläche des Frontabdeckteils (5,6,7,8) Niederschlagsablagerungen verhindert, mindestens eine Schicht aus einem perfluorierten Silan oder aus Polytetrafluorethylen aufweist.

## Claims

1. Front part (5, 6, 7, 8) of a motor vehicle (1), with at least part of the front part being penetrated by electromagnetic waves from a radar sensor (2) for the adaptive regulation of the driving speed, and with deposits of precipitation in solid or liquid form being eliminated and/or prevented in a region of the surface of the front part (5, 6, 7, 8) by the structure of the surface, **characterized in that** a material (9) which is used on the surface of the front part (5, 6, 7, 8) and prevents deposits of precipitation forms a contact angle of greater than 90 degrees with water.

2. Front part according to Claim 1, **characterized in that** the front part is a bumper (5), a spoiler (6), a radiator cover (8), the engine bonnet or an illumination device (7).

3. Front part according to Claim 1 or 2, **characterized in that** the material (9) which prevents deposits of precipitation on the surface of the front part (5, 6, 7, 8) has at least one layer made from a perfluorinated silane or from polytetrafluoroethylene.

## Revendications

1. Elément de cache frontal (5, 6, 7, 8) d'un véhicule (1), selon lequel au moins une partie de cet élément est traversée par les ondes électromagnétiques d'un capteur radar (2) pour la régulation adaptative de la vitesse,
les caractéristiques de la surface éliminant et/ou évitant les dépôts sous forme solide ou liquide dans la zone de la surface de l'élément de cache frontal (5, 6, 7, 8),
**caractérisé en ce qu'**
une matière (9) utilisée pour la surface de l'élément de cache frontal (5, 6, 7, 8) évite les dépôts en formant avec l'eau un angle de contact supérieur à 90°.

2. Elément de cache frontal selon la revendication 1,
**caractérisé en ce qu'**
il est constitué par un pare-choc (5), un déflecteur (6), un cache radiateur (8), un capot de moteur ou une installation d'éclairage (7).

3. Elément de cache frontal selon la revendication 1 ou 2,
**caractérisé en ce que**
la matière (9) appliquée sur la surface de l'élément de cache frontal (5, 6, 7, 8), évitant les dépôts, comporte au moins une couche d'un silane perfluoré ou de polytétrafluoréthylène.
